# EUROPEAN PATENT APPLICATION

(11) **EP 0 709 238 A2**
(43) Date of publication of application: **01.05.1996**
(21) Application number: 95306995.2
(22) Date of filing: 03.10.1995
(51) Int. Cl.: B60C 11/16

(54) **Tire for driving on frozen road surfaces**

(30) Priority: 25.10.1994 JP 260034/94
(71) Applicant: Kudou, Tsutomu, Nagawa-machi, Sannohe-gun, Aomori-ken (JP)
(72) Inventor: Kudou, Tsutomu, Nagawa-machi, Sannohe-gun, Aomori-ken (JP)
(74) Representative: Harding, Richard Patrick

(57) **Abstract**

Many stud devices B are embedded in a tread surface 14a of a peripheral tread 14 of a studless tire 13 spaced at predetermined intervals in order to provide a tire for driving on frozen road surfaces which solves problems involved in using studless tires and dust pollution caused by studded tires. Each stud device B comprises a temperature-sensitive elastic seat 1 which softens/hardens as a temperature rises above/drops below a desired set temperature and which is softer than a material of the tire, a cylindrical slide stud 2 which rests on the temperature-sensitive elastic seat 1, and a cylindrical fixture 3 which covers the temperature-sensitive elastic seat 1 and the base portion of the cylindrical slide stud 2 together while allowing slide movement of the base portion in an axial direction. The cylindrical slide stud 2 are embedded such that tips thereof are capable of projecting from/retracting into the tread surface 14a.

## Description

### BACKGROUND OF THE INVENTION

The present invention relates to the improvement of a tire for driving on frozen road surfaces which is used with a vehicle to run on snow-covered or frozen roads.

Conventional tires of this kind are studded tires in which studs are driven into the tread surface. Studded tires, however, scrape the road surface causing a dust pollution, and hence their use is now prohibited by regulations except for driving on roads in mountainous regions.

At present, studless tires which have emerged to replace studded tires are used. In winter, studless tires have a high tendency to skid on frozen roads because of lack of friction, and to grind compacted snow at the approach of an intersection due to tires' racing, making the road surface more slippery to form a mirror surface. This raises a serious problem mainly in snowy areas such as the Tohoku and Hokkaido regions.

Many devices for solving problems involved in using studless tires and dust pollution caused by using studded tires have been filed. They are disclosed, for example, in Japanese Utility Model Application Nos. 60-46301, 61-26875, 62-58490, 62-176554, 63-34554, and 63-59740.

Most of the devices include studs made of shape-memory alloy, and studs embedded in the tread surface project to quickly convert to a studded tire when the temperature of a road surface drops below a set temperature. The devices, however, suffer from the following problems: the studs themselves are expensive; wear related trouble is involved; the mounting structure is complex and rather fragile, and thus there is a problem with durability. They, therefore, are not yet in practical use.

The studs of conventional studded tires are made of steel and there is the problem that as studded tires run on the asphalt, over a distance of several tens of thousands of kilometers scraping the road surface, the tires wear while the studs project further. That is, as the studded tires get used, the capability of scraping the road surface increases.

### SUMMARY OF THE INVENTION

In view of the foregoing, major objects to attain by the present invention are as follows.

A first object of the present invention is to provide a tire for driving on frozen road surfaces which solves problems involved in using studless tires and dust pollution caused by studded tires.

A second object of the present invention is to provide a tire for driving on frozen road surfaces wherein stud devices are embedded in the tread surface of the tire and wherein studs project from the tread surface to quickly convert to a studded tire when the temperature of a road surface drops below a set temperature which is higher than 0°C.

A third object of the present invention is to provide a tire for driving on frozen road surfaces which uses ceramic cylindrical studs.

A fourth object of the present invention is to provide a tire for driving on frozen road surfaces which uses temperature-sensitive rubber as a seat member which supports a projecting/retracting cylindrical stud.

A fifth object of the present invention is to provide a tire for driving on frozen road surfaces which prevents the embedded cylindrical studs from coming off and scattering due to wear of the tire caused with use over a long period of time.

Other objects of the present invention will be apparent from the specification, drawings, and particularly the scope of the claims.

The aforesaid problems of the conventional device are solved by novel aspects of the present invention described below.

According to a first aspect of the present invention, there is provided a tire for driving on frozen road surfaces characterized as described below. Many stud devices are embedded in an adequate ground-touching surface of the tire along the periphery of the tire spaced at predetermined intervals. Each stud device comprises a temperature-sensitive elastic seat which softens/hardens as the temperature rises above/drops below a desired set temperature and which is softer than the material of the tire, a cylindrical slide stud which rests on the temperature-sensitive elastic seat, and a cylindrical fixture which covers the temperature-sensitive elastic seat and the base portion of the cylindrical slide stud together while allowing slide movement of the base portion in an axial direction. The cylindrical slide studs are embedded such that tips thereof are capable of projecting from/retracting into the ground-touching surface.

According to a second aspect of the present invention, there is provided a tire for driving on frozen road surfaces according to the aforesaid first aspect of the present invention, wherein the temperature-sensitive elastic seat is constructed such that a guide post projects from a disk seat at the center thereof, the disk seat containing a fluid which solidifies at a temperature of higher than 0°C.

According to a third aspect of the present invention, there is provided a tire for driving on frozen road surfaces according to the aforesaid first or second aspect of the present invention, wherein the temperature-sensitive elastic seat is made of silicone rubber.

According to a fourth aspect of the present invention, there is provided a tire for driving on frozen road surfaces according to the aforesaid first or second aspect of the present invention, wherein the cylindrical slide stud has a slide bore formed therethrough at the center thereof to allow the guide post of the temperature-sensitive elastic seat to be inserted thereinto and has a stopper collar around the circumference of the base portion thereof, the stopper collar resting on the disk seat of the temperature-sensitive elastic seat.

According to a fifth aspect of the present invention, there is provided a tire for driving on frozen road surfaces according to the aforesaid first or second aspect of the present invention, wherein the cylindrical slide stud is made of ceramic.

According to a sixth aspect of the present invention, there is provided a tire for driving on frozen road surfaces according to the aforesaid first or second aspect of the present invention, wherein the cylindrical fixture is a bottomless cylinder and has a slide stud insert port formed integrally with a tapered shoulder at the top end thereof, the tapered shoulder fitting to the stopper collar of the cylindrical slide stud.

According to a seventh aspect of the present invention, there is provided a tire for driving on frozen road surfaces according to the aforesaid first or second aspect of the present invention, wherein the adequate ground-touching surface along the periphery thereof is the tread surface of a studless tire.

According to an eighth aspect of the present invention, there is provided a tire for driving on frozen road surfaces according to the aforesaid first or second aspect of the present invention, wherein the set temperature ranges from 15°C to 0°C.

According to a ninth aspect of the present invention, there is provided a tire for driving on frozen road surfaces according to the aforesaid second aspect of the present invention, wherein the fluid which solidifies at a temperature of higher than 0°C is acetic acid.

According to a tenth aspect of the present invention, there is provided a tire for driving on frozen road surfaces according to the aforesaid first or second aspect of the present invention, wherein the cylindrical fixture is made of copper.

According to an eleventh aspect of the present invention, there is provided a tire for driving on frozen road surfaces according to the aforesaid first aspect of the present invention, wherein the temperature-sensitive elastic seat is made of shape-memory polymer which has much elasticity at a temperature of higher than a predetermined point thereof and has little elasticity at a temperature of lower than the predetermined point thereof.

The present invention employs novel means as described above. In detail, a stud device employs an elastic construction to allow a cylindrical slide stud to project/retract thereby to prevent it from scraping an asphalt surface. The cylindrical slide stud is made of ceramic. In view of the potential breakage of the cylindrical slide stud due to impact from the road surface, the stud device is constructed so as to function like a shock absorber, thereby preventing such breakage.

According to the pin device, a rubber softer than the tire itself is embedded in the tire to support the cylindrical slide stud, thereby easing a reaction force and impact which the cylindrical slide stud receives from the road surface. Also, the rubber is such that it shows a great difference in elasticity between temperatures above a set temperature and temperatures below the set temperature, thereby rigidly supporting the ceramic cylindrical slide stud and preventing it from retracting when the temperature drops below the set temperature. On the contrary, when the temperature rises above the set temperature, the rubber becomes soft, so that the cylindrical slide stud is always retracted into the tire by a compressive force. Thus, the tire functions like a conventional studless tire.

### DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
Fig. 1 is a partial longitudinal sectional view showing only one stud device according to the embodiment of the present invention, and
Fig. 2 is an enlarged exploded view of the stud device shown in Fig. 1.

### DETAILED DESCRIPTION OF THE EXEMPLARY EMBODIMENT

An embodiment of the present invention will now be described in detail with reference to the drawings.

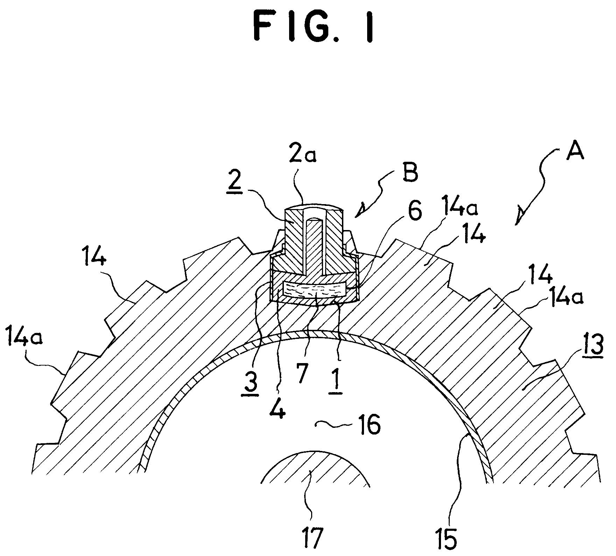

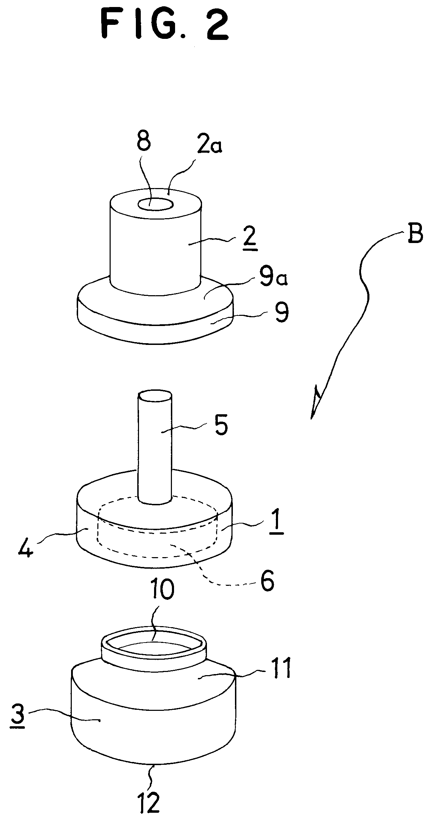

Fig. 1 is a partial longitudinal sectional view showing only one stud device according to the embodiment of the present invention. Fig. 2 is an enlarged exploded view of the stud device shown in Fig. 1.

In Figs. 1 and 2, reference character A denotes a tire for driving on frozen surfaces according to the embodiment, reference character B denotes a stud device, numeral 1 denotes a temperature-sensitive elastic seat, numeral 2 denotes a cylindrical slide stud, numeral 3 denotes a cylindrical fixture, numeral 4 denotes a disk seat, numeral 5 denotes a guide post, numeral 6 denotes a cavity, numeral 7 denotes acetic acid, numeral 8 denotes a slide bore, and numeral 9 denotes a stopper collar having a tapered top surface.

Numeral 10 denotes a slide stud insert port integrally formed with a tapered shoulder, numeral 11 denotes a tapered shoulder, numeral 12 denotes a seat fitting bottom port, numeral 13 denotes a studless tire, numeral 14 denotes a tread, numeral 14a denotes a tread surface, numeral 15 denotes steel, numeral 16 denotes air, and numeral 17 denotes a wheel.

The temperature-sensitive elastic seat 1 is made of silicone rubber softer than the material of the tire. The guide post 5 projects from the disk seat 4 at the center thereof, and the cavity 6 is filled with a fluid such as acetic acid which solidifies at a temperature of higher than 0°C.

The cylindrical slide stud 2 is made of ceramic. It has the slide bore 8 formed therethrough at the center thereof to allow the guide post 5 of the temperature-sensitive elastic seat 1 to be inserted therein and has a stopper collar 9 around the circumference of the base portion thereof, the stopper collar 9 resting on the disk seat 4 of the temperature-sensitive elastic seat 1.

The disk seat 4 and the stopper collar 9 have the same outside diameter.

The cylindrical fixture 3 is a bottomless cylinder made of copper. It has the seat fitting bottom port 12 at its bottom end to allow direct contact with the tire for free thermal transmission and has the slide stud insert port 10 integrally formed with the tapered shoulder 11 at its top end. The tapered shoulder 11 fits to the stopper collar 9 of the cylindrical slide stud 2.

The outside diameter of the disk seat 4 and the stopper collar 9 is substantially identical with the inside diameter of the cylindrical fixture 3. The stacked height of the disk seat 4 and the stopper collar 9 is substantially identical with the inner height of the cylindrical portion extending up to the tapered shoulder 11 of the cylindrical fixture 3. The tapered top surface 9a of the stopper collar 9 is substantially identical to the shape of the inner surface of the tapered shoulder 11.

Many pin devices B are embedded in the tread surface 14a of the tread 14 of the studless tire 13 in such a manner that the tip 2a of the cylindrical slide stud 2 is capable of projecting from/retracting into the tread surface 14a, each pin device B comprising the cylindrical fixture 3 which covers the temperature-sensitive elastic seat 1 and the base portion of the cylindrical slide stud 2 together while allowing slide movement of the base portion in an axial direction.

Since the embodiment has the concrete structure as mentioned above, a group of the stud devices B functions as a device which absorbs a reaction force from the road surface. A fluid such as the acetic acid 7 which solidifies at a temperature of higher than 0°C is contained in the cavity 6 of the disk seat 4 of the temperature-sensitive elastic seat 1 which is made of silicone rubber softer than the studless tire 13, thereby easing a reaction force and an impact force from the road surface. Thus, because of the weight of the vehicle, tips 2a of a group of the cylindrical slide studs 2 retract into the tread surface 14a of the tread 14 of the studless tire 13. Accordingly, there is no problem of scraping the road surface, and also the studs are not damaged by impact.

The fluid 7 such as acetic acid contained in the cavity 6 solidifies in response to a difference in temperature (a solidifying point can be set within the range from 15°C to 0°C). When the temperature of the studless tire 13 drops below a solidifying point, the temperature-sensitive elastic seats 1 harden to secure a group of the cylindrical slide studs 2. Accordingly, even the weight of the vehicle fails to cause the tips 2a to retract into the tread surface 14a, and the cylindrical slide studs 2 are held in a projected state to effect the function of a studded tire.

On the contrary, when the temperature of the road surface (temperature of the studless tire 13) rises above the solidifying point, the temperature-sensitive elastic seats 1 become soft. Accordingly, a reaction force from the road surface causes the tips 2a of a group of the cylindrical slide studs 2 to retract into the tread surface 14a of the studless tire 13, thereby effecting the function of the studless tire 13.

Even when the tread surface 14a of the studless tire 13 according to the embodiment wears down, a centrifugal force fails to cause the cylindrical slide stud 2 to easily fly away during the vehicle's traveling because the tapered shoulder 11 securely holds the stopper collar 9 of the cylindrical slide stud 2.

Additionally, said temperature-sensitive elastic seats 1 in the stud devices B can be made of shape-memory polymer such as being composed of synthetic rubber or plastics instead of said silicone rubber. Because, the shape-memory polymer in general has much elasticity at a temperature of higher than a predetermined point itself and has no or little elasticity at a temperature of lower than the predetermined point itself, which fulfills the same function as described above of said silicone rubber.

Moreover, each shape-memory polymer made temperature-sensitive elastic seat 1 does not always need said guide post 5, because a group of the cylindrical slide studs 2 can be secured tightly without the guide post 5 when the temperature of each present temperature-sensitive elastic seat 1 drops below a predetermined point. But if desire to provide the guide post 5 in order to obtain the certainty, it is available to set and adhere it as an appendix such as being composed of aforesaid silicon rubber (Each guide post 5 does not need to be made of shape-memory polymer).

That is to say, the temperature-sensitive elastic seats 1 themselves harden at a temperature of lower than the predetermined point in response to a difference in temperature (a predetermined point can be set within the range from 15°C to 0°C). When the temperature of the studless tire 13 drops below a predetermined point, the temperature-sensitive elastic seats 1 harden to secure a group of the cylindrical slide studs 2. Accordingly, even the weight of the vehicle fails to cause the tips 2a to retract into the tread surface 14a, and the cylindrical slide studs 2 are held in a projected state to effect the function of a studded tire.

On the contrary, when the temperature of the road surface (temperature of the studless tire 13) rises above the predetermined point, the temperature-sensitive elastic seats 1 become soft. Accordingly, a reaction force from the road surface causes the tips 2a of a group of the cylindrical slide studs 2 to retract into the tread surface 14a of the studless tire 13, thereby effecting the function of the studless tire 13.

According to the embodiment, the tread surface 14a of the studless tire 13 wears faster than the tip 2a of the cylindrical slide stud 2, and the temperature-sensitive elastic seat 1 having a shock absorbing function minimizes the wear of the cylindrical slide stud 2. Thus, there is almost no need to replace the cylindrical slide studs 2. The stud devices B may be marketed in an assembled state, and the tire may be structured so that the cylindrical slide studs 2 or the stud devices B themselves can be easily replaced one by one at a gas or service station or the like or even by individual people.

As has been described above, according to the present invention, a fluid such as acetic acid which solidifies at a temperature of higher than 0°C is prepared so as to solidify at a desired set temperature according to the region to be driven in and the road conditions, and thus prepared fluid is contained in the cavity of a disk seat of a temperature-sensitive elastic seat. Accordingly, when the temperature of a road surface is higher than the set temperature, i.e. when a snow-covered or frozen road surface is not the case, a reaction force from the road surface causes the tips of a group of cylindrical slide studs to easily retract into the tread surface, thereby effecting the function of an ordinary studless tire and preventing dust pollution caused by scraping the road surface.

On the other hand, when the temperature of the road surface drops below the set temperature, i.e., when a snow-covered or frozen road surface is the case, the tips of a group of cylindrical slide studs remain projecting from the tread surface against a reaction force from the road surface thereby to effect the function of a studded tire. This increases a frictional force greatly. Accordingly, a skid accident or an accident resulting in injury or death can be prevented when driving on frozen or snow-covered roads or roads in a mountainous region. Also, traffic jams caused by such accidents can be prevented. Thus, the invention provides excellent effects such as contributing to traffic safety.

## Claims

1. A tire for driving on frozen road surfaces wherein many stud devices are embedded in an adequate ground-touching surface of the tire along the periphery thereof spaced at predetermined intervals, each stud device comprising:
a temperature-sensitive elastic seat means which softens/hardens as the temperature rises above/drops below a desired set temperature and which is softer than the material of said tire;
a cylindrical slide stud means which rests on said temperature-sensitive elastic seat means; and
a cylindrical fixture means which covers said temperature-sensitive elastic seat means and base portion of said cylindrical slide stud means together while allowing slide movement of the base portion in an axial direction, and
wherein said cylindrical slide studs means are embedded such that tips thereof are capable of projecting from/retracting into the ground-touching surface.

2. A tire for driving on frozen road surfaces according to Claim 1, wherein said temperature-sensitive elastic seat means comprises a disk seat and a guide post projecting from the center of the disk seat, and the disk seat contains a fluid which solidifies at a temperature of higher than 0°C.

3. A tire for driving on frozen road surfaces according to Claim 1 or 2, wherein said temperature-sensitive elastic seat means is made of silicone rubber.

4. A tire for driving on frozen road surfaces according to Claim 1 or 2, wherein said cylindrical slide stud means has a slide bore formed therethrough at the center thereof to allow the guide post of said temperature-sensitive elastic seat means to be inserted thereinto and has a stopper collar around the circumference of the base portion thereof, the stopper collar resting on the disk seat of said temperature-sensitive elastic seat means.

5. A tire for driving on frozen road surfaces according to Claim 1 or 2, wherein said cylindrical slide stud means is made of ceramic.

6. A tire for driving on frozen road surfaces according to Claim 1 or 2, wherein said cylindrical fixture means is a bottomless cylinder and has a slide stud insert port formed integrally with a tapered shoulder at the top end thereof, the tapered shoulder fitting to the stopper collar of said cylindrical slide stud means.

7. A tire for driving on frozen road surfaces according to Claim 1 or 2, wherein the adequate ground-touching surface along the periphery of the tire is the tread surface of a studless tire.

8. A tire for driving on frozen road surfaces according to Claim 1 or 2, wherein the set temperature is in the range from 15°C to 0°C.

9. A tire for driving on frozen road surfaces according to Claim 2, wherein the fluid which solidifies at a temperature of higher than 0°C is acetic acid.

10. A tire for driving on frozen road surfaces according to Claim 1 or 2, wherein said cylindrical fixture means is made of copper.

11. A tire for driving on frozen road surfaces according to Claim 1, wherein said temperature-sensitive elastic seat means is made of shape-memory polymer which has much elasticity at a temperature of higher than a predetermined point thereof and has little elasticity at a temperature of lower than the predetermined point thereof.
